# EUROPEAN PATENT SPECIFICATION

(11) **EP 4 377 048 B1**
(45) Date of publication and mention of the grant of the patent: **20.05.2026**
(21) Application number: 22741394.5
(22) Date of filing: 12.07.2022
(51) Int. Cl.: B25B 5/08, B25B 5/06

(54) **DEVICE FOR CLAMPING WORKPIECES ON MACHINE TOOLS**
VORRICHTUNG ZUM SPANNEN VON WERKSTÜCKEN AUF WERKZEUGMASCHINEN
DISPOSITIF DE SERRAGE DE PIECES SUR MACHINES-OUTILS

(30) Priority: 30.07.2021 IT 202100020684
(43) Date of publication of application: 05.06.2024
(73) Proprietor: Hydroblock S.r.l., 42124 Reggio Emilia (RE) (IT)
(72) Inventor: ZANNI, Davide, 42124 Reggio Emilia (RE) (IT)
(74) Representative: Luppi, Emanuele
(86) International application number: PCT/IB2022/056412
(87) International publication number: WO 2023/007291

(56) References cited:
- EP-A1- 3 433 054
- FR-A1- 2 681 914
- JP-A- 2016 006 353
- JP-A- H0 890 103
- US-A1- 2002 135 116

## Description

### Technical Field

The present invention relates to a device for clamping workpieces on machine tools.

### Background Art

As is well known, in large-scale production of mechanical workpieces requiring machining with the machine tool, the use is widespread of highly automated systems in which one or more machine tools are electronically controlled by a processing and control unit and one or more anthropomorphic robots bring the workpieces to be machined with the machine tools, where special fastening systems, either of the hydraulic or pneumatic type, take over the workpiece and clamp it in place to allow the machining operation thereof.

When machining is completed, the aforementioned fastening systems release the machined workpiece, which is moved away once again by means of the robots. One particular type of fastening system consists of a bracket that, by means of a hydraulic or pneumatic drive, is movable either in a rotating mode around an axis of rotation or in a sliding mode along the same axis of rotation.

The bracket is mounted cantilevered on the stem of a hydraulic/pneumatic actuator partly inserted into a fluid-operated cylinder.

Between the stem and the cylinder there are roto-translation means, that is, special constraining means that allow the stem, and thus the bracket mounted thereon, to roto-translate.

Such fastening systems must be capable of exerting even very large clamping forces on the workpiece to be machined.

This need is particularly felt, for example, in the automotive industry, wherein the continuing need to optimize production cycles has led to the use of tools operating at very high speeds, unloading huge forces and vibrations onto the workpiece that must be offset by the fastening systems.

Still in the automotive sector, moreover, it is becoming increasingly common to use particularly lightweight materials such as aluminum, which, however, during machining on the machine tool are unable to provide the same strength as materials such as cast iron and steel.

Therefore, it is necessary that the workpiece clamping bracket, in addition to exerting a very high force, rests on the workpiece at predetermined points, with great precision and in a repeatable manner whenever a new workpiece to be machined is mounted on the machine tool; otherwise, in fact, the great force exerted by the bracket can cause the workpieces to deform, which can compromise the quality of the machining operation and risk of obtaining out-of-tolerance workpieces.

In this regard, it is easy to understand that in systems with a high level of automation, the degree of operational reliability of each component, including the workpieces fastening systems, is usually very high.

Nonetheless, it sometimes happens that the mechanical workpieces to be machined are not placed correctly and accurately and the fastening systems fail to immobilize the workpiece perfectly (or do so but in the wrong position), thus risking compromising the entire machining process and damaging the workpiece and/or machining tools and/or fastening systems.

Similar problems can also occur when unloading the workpiece at the end of the machining process; in fact, in the event that the fastening systems do not fully and correctly release the machined workpiece, the workpiece handling robot picks up (or tries to pick up) a workpiece that is not perfectly released, with the risk of seriously damaging the workpiece and/or the fastening systems and/or the robot itself.

In this context, it is emphasized that, in highly automated plants, any malfunction that results in the stoppage of machining easily turns into a loss of production or, even worse, damage to the systems, and consequent economic damage of non-negligible magnitude.

To partly remedy this problem, some known type of fastening systems involve the use of a closure control valve that, by means of a probe, detects the actual attainment of the clamping configuration by the bracket, so as to provide the machine tool's processing and control unit with the information that the fastening system is located in the workpiece's machining position and machining of the workpiece can actually begin safely.

Such a closure control valve, however, is totally ineffective in detecting the configuration of complete release of the workpiece and, therefore, does not provide any help and cannot solve the above-mentioned problems that may occur during the unloading phase of the workpiece at the end of the machining operation.

Added to this is the fact that the conditions under which the fastening systems of known type must operate are often very complex; the spaces on board conventional machine tools are generally very small and not even all of them exploitable, since some areas of them are subject to the accumulation of condensation, dirt, rust and other erosive agents, so much so that in some circumstances even traditional protective galvanizing coatings do not last long. It is for this reason, therefore, that conventional fastening systems must inconveniently have very small size, and it is always quite complex and difficult to provide them with additional components to improve the performance thereof.

A device according to the preamble of claim 1 is known form EP3433054A1, from the same applicant.

In light of the above, it is easy to understand how the fastening systems of known type are susceptible of refinements.

### Description of the Invention

The main aim of the present invention is to devise a device for clamping workpieces on machine tools which allows avoiding the performance of mechanical machining on workpieces that are not properly placed and clamped on the machine tool and, at the same time, avoiding the unloading of workpieces that are not perfectly released at the end of machining.

Another object of the present invention is to devise a device for clamping workpieces on machine tools with high reliability and precision of operation.

Not the least object of the present invention is to devise a device for clamping workpieces on machine tools which allows avoiding unwanted malfunction and damage to the workpiece being machined and/or to the tools of the machine tool and/or to the workpiece handling robot and/or to the clamping device itself.

Still another object of the present invention is to devise a device for clamping workpieces on machine tools which has small sizes and can be mounted with remarkable ease on conventional machine tools.

A further object of the present invention is to devise a device for clamping workpieces on machine tools that can overcome the aforementioned drawbacks of the prior art within the framework of a simple, rational, easy and effective to use as well as cost-effective solution.

The above objects are achieved by this device for clamping workpieces on machine tools, as defined by the features of claim 1.

Preferred embodiments are defined by the features of the dependent claims.

### Brief Description of the Drawings

Other characteristics and advantages of the present invention will become more apparent from the description of a preferred, but not exclusive, embodiment of a device for clamping workpieces on machine tools, illustrated by way of an indicative, yet non-limiting example, in the accompanying tables of drawings in which:

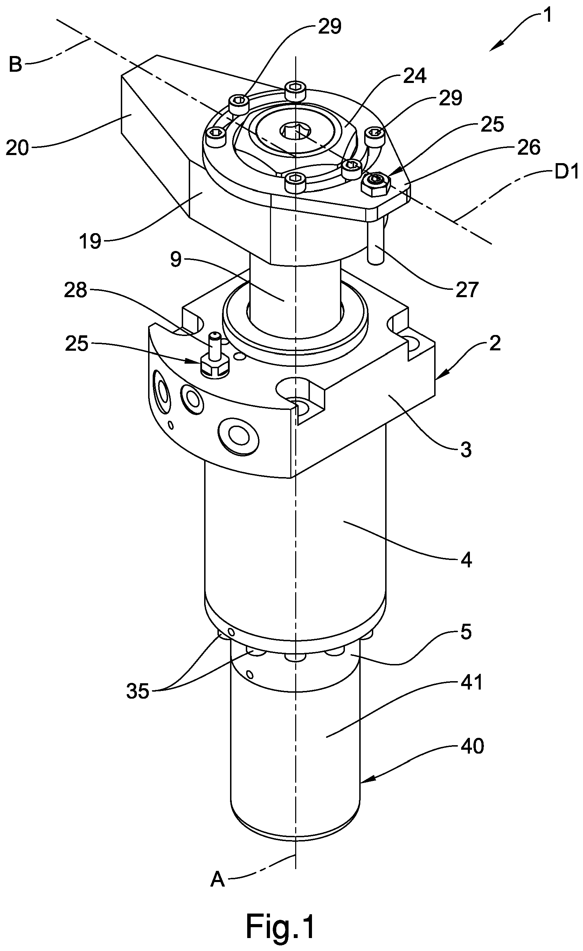

Figure 1 is an axonometric view of the device according to the invention;

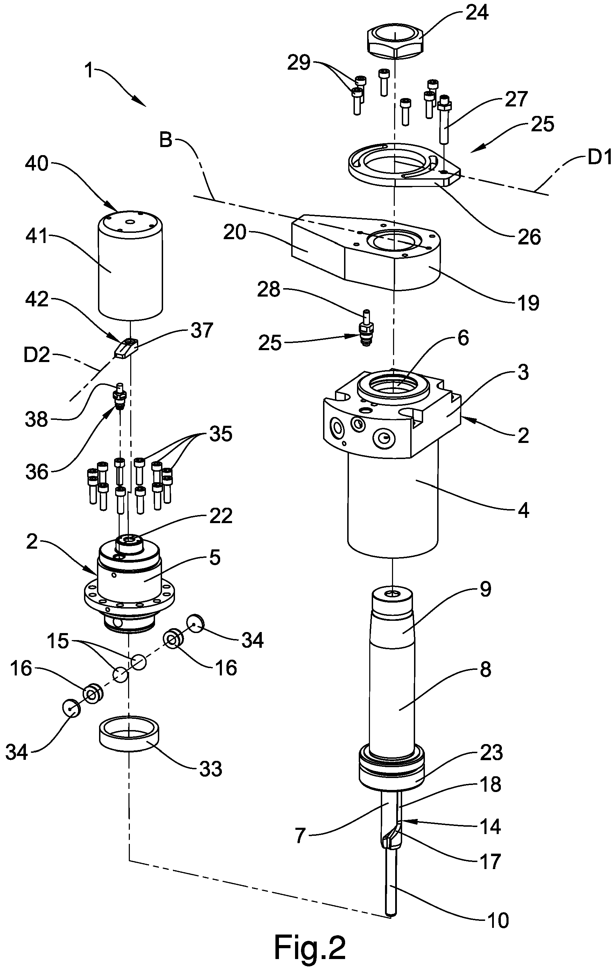

Figure 2 is an exploded view of the device according to the invention;
Figure 3 is a side, partly sectional, view of the device according to the invention in a home position;
Figure 4 is a side, partly sectional, view of the device according to the invention in the intermediate position;
Figure 5 is a side, partly sectional, view of the device according to the invention in the working position;
Figure 6 is a sectional view of the device according to the invention along the VI - VI plane in Figure 3.

### Embodiments of the Invention

With particular reference to these figures, reference numeral 1 globally indicates a device for clamping workpieces on machine tools.

The device 1, in particular, is intended to clamp a workpiece P after it has been placed on a worktop L of a machine tool M and before machining begins.

The worktop L, in actual facts, divides the space on board the machine tool M into a first volume V1, which represents the area in which the workpiece P is placed and in which mechanical machining operations are performed, and a second volume V2, which represents the area inside the machine tool M which is generally inaccessible during the execution of mechanical machining operations.

The machine tool M is preferably of the highly automated type, wherein an anthropomorphic robot is dedicated to loading the workpieces P to be machined and to unloading the machined workpieces P.

It should be emphasized that the machine tool M is usefully provided with a plurality of devices 1, which are arranged in appropriate positions and quantities according to the conformation of the workpiece P and to the type of mechanical machining operations to be performed.

Only one device 1 will be referred to in the figures and in the remainder of this disclosure for simplicity, unless otherwise stated.

The device 1 comprises at least one basic body 2 fixable to the machine tool M, e.g. to its worktop L, its bedplate, or any other part thereof.

The basic body 2 is provided with a fluid-operated cylinder 3, 4, 5 containing a fluid under pressure.

In the context of the present disclosure, a fluid under pressure is defined as any fluid in the liquid (and therefore ideally incompressible) or gaseous (and therefore compressible) state used as a carrier medium for the transport of energy in a hydraulic or pneumatic circuit; preferably the fluid under pressure consists of a conventional mineral oil but alternative embodiments cannot be ruled out wherein it may be synthetic oil, vegetable oil, water, air or the like. Since the device 1 has several parts in contact with the fluid under pressure, special seals are provided arranged at different points of the device 1 which, for simplicity of representation, have been commonly identified by reference numeral 21.

The fluid-operated cylinder 3, 4, 5 is defined, e.g., by a main block 3 provided with a transit hole 6, a hollow liner 4 extending from the main block 3 and a bottom plate 5 associated with the hollow liner 4 on the opposite side from the main block 3.

The hollow liner 4 is made, e.g., in one monolithic body with the basic body 2, while the bottom plate 5 is made in one or more separate bodies which are associated with the hollow liner 4 by means of screws 35 or other fastening means.

The bottom plate 5 has a cavity 11 that ends up in a transit opening 22 aligned with the transit hole 6 and arranged on the opposite side therefrom.

The device 1 also comprises at least one stem 8, 9, 10 extending along a main axis A and is partly inserted into the fluid-operated cylinder 3, 4, 5 in a sliding manner along the main axis A by thrust of the hydraulic fluid under pressure. The stem 8, 9, 10 comprises at least one intermediate portion 8, arranged inside the fluid-operated cylinder 3, 4, 5, and a first end portion 9, extending out of said fluid-operated cylinder 3, 4, 5.

In more detail, the first end portion 9 exits through the transit hole 6.

The intermediate portion 8 is shaped to define a driving piston 23, i.e., a part with a thickened section that runs to size on the inner walls of the fluid-operated cylinder 3, 4, 5 and divides it into two opposite chambers; the pressure supply of the fluid under pressure alternately in the two chambers allows the stem 8, 9, 10 to slide in one direction or in the opposite direction along the main axis A.

In the proximity of the bottom plate 5 the intermediate portion 8 is shaped to define a guiding stretch 7 inserted into the cavity 11.

Both the guiding stretch 7 and the cavity 11 extend along the main axis A, and during the motion of the stem 8, 9, 10 along the main axis A, the guiding stretch 7 always remains inserted at least partly into the cavity 11.

On the opposite side from the first end portion 9, the stem 8, 9, 10 also comprises at least a second end portion 10 extending out of the fluid-operated cylinder 3, 4, 5.

Specifically, the second end portion 10 extends out of the fluid-operated cylinder 3, 4, 5 through the transit opening 22 made in the bottom plate 5.

In actual facts, the second end portion 10 extends cantilevered out of the guiding stretch 7 and in alignment with the main axis A.

The operation and utility of the second end portion 10 will be described later in this disclosure.

Advantageously, roto-translation means 14, 15, 16 are positioned between the fluid-operated cylinder 3, 4, 5 and the stem 8, 9, 10, which roto-translation means are adapted to split the motion of the stem 8, 9, 10 into:
- at least a first roto-translation stretch 12, wherein the stem 8, 9, 10 slides along the main axis A and rotates around the main axis A for a predetermined angle of rotation α; and
- at least a second translation stretch 13, wherein the stem 8, 9, 10 slides along the main axis A without rotating.

The predetermined angle of rotation α is preferably equal to 90°, but alternative embodiments wherein such an angle is different cannot be ruled out either.

The roto-translation means 14, 15, 16 comprise:
- at least one groove 14 formed on at least one of either the fluid-operated cylinder 3, 4, 5 or the stem 8, 9, 10 and having a first section 17 substantially helical and a second section 18 substantially straight which extends parallel to the main axis A; and
- at least one engagement element 15 mounted on the other of either the fluid-operated cylinder 3, 4, 5 or the stem 8, 9, 10 and inserted inside the groove 14 in a sliding manner.

The sliding of the engagement element 15 along the first section 17 causes the motion of the stem 8, 9, 10 along the first stretch 12 and the sliding of the engagement element 15 along the second section 18 causes the motion of the stem 8, 9, 10 along the second stretch 13.

In the particular embodiment of the invention shown in the figures, the groove 14 is advantageously cut on the outer surface of the guiding stretch 7 while the engagement element 15 is mounted on the bottom plate 5 so that it protrudes inside the cavity 11.

Even more in detail, in the particular embodiment of the invention shown in the figures, the roto-translation means 14, 15, 16 comprise two grooves 14, cut on opposite surfaces of the guiding stretch 7, and two engagement elements 15, mounted on opposite surfaces of the cavity 11, so as to ensure greater stability and precision during the start-up of the stem 8, 9, 10.

High precision in the movement of the stem 8, 9, 10 is also given by the fact that the roto-translation means 14, 15, 16 comprise elastic offset means 16 adapted to push the engagement elements 15 inside the grooves 14.

The elastic offset means 16, in practice, ensure that the sliding of the engagement elements 15 in the corresponding grooves 14 always occurs with the highest precision, even when the contacting surfaces begin to experience wear; in other words, the elastic offset means 16 allow for backlash and wear offset between the grooves 14 and the engagement elements 15.

The elastic offset means 16 consist, e.g., of one or more disc springs housed inside the bottom plate 5 and arranged so as to impart on the engagement elements 15 a force directed along a direction orthogonal to the main axis A.

In this regard, it should be noted that a retaining ring 33 is mounted on the stem 8, 9, 10 for the lateral restraint of the disc springs 16, and a set of pads 34 positioned in the radial direction between the retaining ring 33 and the disc springs 16.

The pads 34 have the function of calibrating the preload of the disc springs 16 and, in addition, operate as end-of-stroke for the engagement elements 15 to protect the soundness of the disc springs 16.

The device 1 also comprises at least one clamping bracket 19, 20 associated with the first end portion 9 of the stem 8, 9, 10 for clamping the workpiece P to be machined on the machine tool M.

The clamping bracket 19, 20 comprises:
- a proximal portion 19, which is attached to the first end portion 9 of the stem 8, 9, 10, e.g. by means of a fastening ring nut 24; and
- a distal portion 20, which extends cantilevered from the proximal portion 19 along a direction of work B substantially transverse, preferably orthogonal, to the main axis A and which is adapted to contact the workpiece P.

The clamping bracket 19, 20 is movable between:
- a home position, wherein the clamping bracket 19, 20 is spaced apart from the basic body 2 and, therefore, from the worktop L; and
- a work position, wherein the clamping bracket 19, 20 is moved close to the basic body 2 for clamping the workpiece P.

In the particular embodiment shown in the figures wherein, as mentioned, the device 1 advantageously also comprises the roto-translation means 14, 15, 16, the clamping bracket 19, 20 is of the roto-translation type and comprises an intermediate position arranged between the home position and the work position.

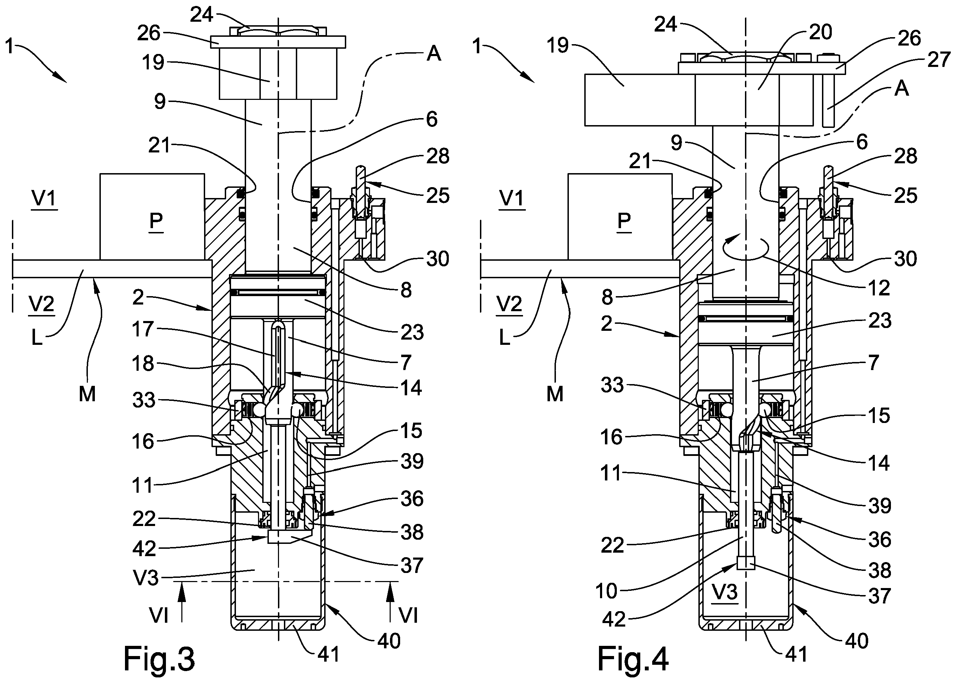

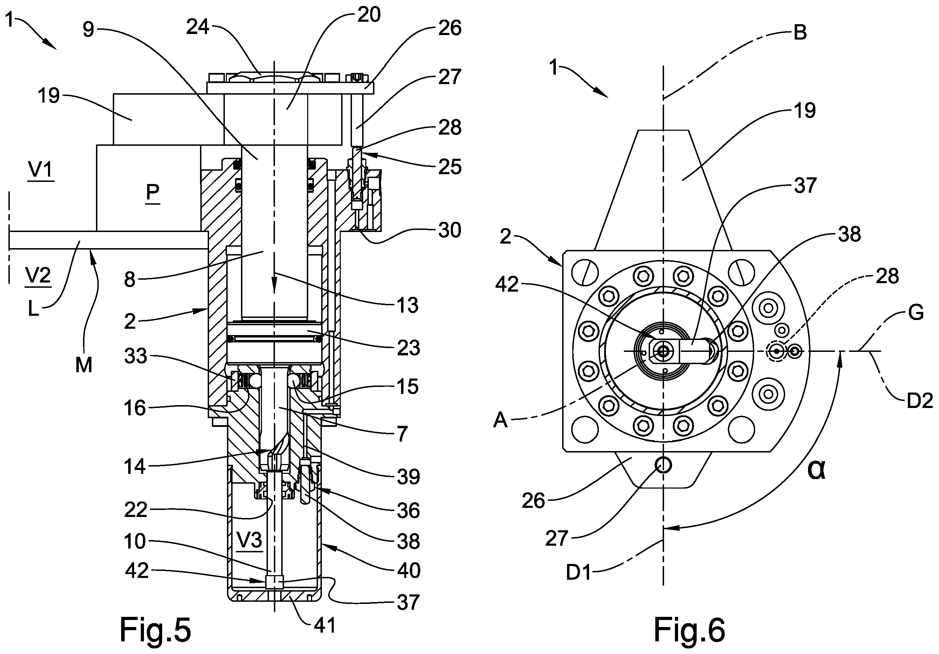

Compared with the home position (shown in Figure 3), in the intermediate position (shown in Figure 4) the clamping bracket 19, 20 is rotated and moved close to the basic body 2 as a result of the motion of the stem 8, 9, 10 along the first stretch 12, while in the work position (shown in Figure 5) the clamping bracket 19, 20 is further moved close to the basic body 2 with respect to the intermediate position as a result of the motion of the stem 8, 9, 10 along the second stretch 13.

Alternative embodiment solutions cannot, however, be ruled out wherein the roto-translation means 14, 15, 16 are not provided and the clamping bracket 19, 20 is movable between the home position and the work position without rotating.

It should also be noted that in the particular embodiment shown in the figures, the basic body 2 of the device 1 is arranged so that the main axis A turns out to be substantially vertical, with the workpiece P being arranged above the worktop L and having an upward-facing surface on which the clamping bracket 19, 20 rests in the work position.

In this arrangement, the first volume V1 is arranged above the worktop L while the second volume V2 is arranged below the worktop L.

For simplicity of description, in the remainder of this disclosure, reference will be made to the arrangement of the device 1 shown in the figures, and, therefore, terms such as "top", "bottom", "above", "below", "to raise", "to lower" and others related thereto are to be understood with reference to what is shown in the figures.

It is easy to understand, however, that the device 1 can be attached to the machine tool M with the main axis A oriented differently (such as e.g. horizontally or obliquely), depending on how the workpiece P to be clamped is shaped and arranged.

The device 1 comprises at least a first control assembly 25 adapted to control the attainment of the work position by the clamping bracket 19, 20.

The first control assembly 25 comprises:
- at least a first probe element 26, 27 associated with the first end portion 9 of the stem 8, 9, 10; and
- at least a first contact sensor 28 associated with the basic body 2 and adapted to detect the contact with the first probe element 26, 27 when the work position is reached.

In more detail, the first probe element 26, 27 e.g. comprises:
- an auxiliary bracket 26, extending cantilevered from the first end portion 9 along a direction D1 substantially transverse, preferably orthogonal, to the main axis A; and
- a probe pin 27, which is associated with the auxiliary bracket 26, extends along a direction substantially parallel to the main axis A and is adapted to make contact with the first contact sensor 28 when the work position is reached.

It should be noted that the auxiliary bracket 26 is fastened to the first end portion 9 of the stem 8, 9, 10 by the interposition of the clamping bracket 19, 20; more specifically, the auxiliary bracket 26 is connected, via the removable connecting means 29, such as e.g. of the type of screws, bolts or the like to the clamping bracket 19, 20, which in turn is attached to the first end portion 9. The first contact sensor 28, on the other hand, advantageously comprises a first slider which is mounted on the basic body 2 in a sliding manner along a direction substantially parallel to the main axis A and which is connected to a first sensing line 30 in which a sensing fluid flows.

The first sensing line 30 is at least partly formed in the basic body 2 and is connected to a control system in a fluid-operated manner, which control system is adapted to authorize the machining of the workpiece P when the sensing fluid pressure exceeds or falls under a threshold value.

The control system, not shown in the figures, consists, e.g., of a control unit (electronic, hydraulic, or a combination of both) that manages the operation of the machine tool M.

In practice, when the clamping bracket 19, 20 moves along the main axis A to reach the clamping position, the first probe element 26, 27 makes contact and pushes the first slider 28 to slide parallel to the main axis A; this changes the pressure of the sensing fluid in the first sensing line 30 and provides the control system with the information that the device 1 has correctly and smoothly reached the clamping position.

In this circumstance, which is shown in Figure 5, the control system consents to the execution of mechanical machining operations by the tools of the machine tool M.

If this is not the case, that is, if the first slider 28 is not pressed by the first probe element 26, 27, then the control system learns that the clamping bracket 19, 20 has not reached the clamping position (for example, because the clamping phase of the workpiece P has not finished yet or because of incorrect placement of the workpiece P on the machine tool M) and does not authorize the start of the mechanical machining operations.

The lack of authorization safeguards the workpiece P and the machine tool M by preventing potentially dangerous operations to the soundness of the same.

In response to the lack of authorization, protocols aimed at restoring normal working conditions can be activated, such as e.g. repositioning the workpiece P and/or having an operator intervene.

The device 1 comprises at least a second control assembly 36 adapted to monitor the attainment of the home position.

The second control assembly 36 comprises:
- at least a second probe element 42 associated with the second end portion 10 of the stem 8, 9, 10; and
- at least a second contact sensor 38 associated with the basic body 2 and adapted to detect the contact with the second probe element 42 when the home position is reached.

In more detail, it is specified, according to the invention, that the second probe element 42 comprises at least one probe bracket, which extends cantilevered from the second end portion 10 along a direction D2 substantially transverse, preferably orthogonal, to the main axis A and which is adapted to make contact with the second contact sensor 38 when the home position is attained.

The second contact sensor 38, on the other hand, advantageously comprises a second slider which is mounted on the basic body 2 in a sliding manner along a direction substantially parallel to the main axis A and that is connected to a second sensing line 39 wherein a sensing fluid flows.

The second sensing line 39 is at least partly formed into the basic body 2 and is connected in a fluid-operated manner to a control system adapted to authorize the picking of the workpiece P from the machine M when the sensing fluid pressure exceeds or falls under a threshold value.

The control system intended to authorize the picking of the workpiece P may usefully coincide with the control system intended to authorize the machining of the workpiece P and consist, e.g., of the control unit that manages the operation of the machine tool M.

In practice, when the clamping bracket 19, 20 moves along the main axis A to reach the home position, the second probe element 42 makes contact and pushes the second slider 38 to slide parallel to the main axis A; this changes the pressure of the sensing fluid in the second sensing line 39 and provides the control system with the information that the device 1 has correctly and smoothly reached the home position.

In this circumstance, which is shown in Figure 3, the control system consents to the activation of the robot to pick up the workpiece P.

If this is not the case, i.e., if the second slider 38 is not pressed by the second probe element 42, then the control system learns that the clamping bracket 19, 20 has not reached the home position (e.g., because the release phase of the workpiece P has not finished yet or because of an unwanted collision between the clamping bracket 19, 20 and other parts of the machine tool M or of the workpiece P) and does not authorize the robot to start the picking operation. Again, the lack of authorization safeguards the workpiece P and the machine tool M by preventing potentially dangerous operations to the soundness of the same, and in response to the lack of authorization, protocols aimed at restoring the normal working conditions can be activated, such as the intervention of an operator to check for any obstructions or collisions that may have occurred on the clamping bracket 19, 20.

It is emphasized that the special expedient of providing a probe bracket 37 with an elongated conformation extending along the direction D2 allows the second probe element 42 to make contact with the second contact sensor 38 only if the clamping bracket 19, 20 and the stem 8, 9, 10 have successfully completed the roto-translation path to return to the home position and, therefore, have not only translated along the main axis A but have also rotated by the predetermined rotation angle α.

In this regard, it should be noted that in the event that accidents occur during the release of the workpiece P caused by the unwanted collision of the clamping bracket 19, 20 with other parts of the machine tool M or of the workpiece P, the clamping bracket 19, 20 may find itself impeded in rotation but free in translation, i.e., it may make contact with an obstacle that does not allow it to rotate but only to slide along the main axis A.

In such a case study, the force produced by the fluid under pressure may be so great that it breaks the roto-translation means 14, 15, 16 and causes the clamping bracket 19, 20 and the stem 8, 9, 10 to rise without letting them to perform their intended rotation around the predetermined angle of rotation α.

In the absence of this rotation, the probe bracket 37 does not rotate either and, therefore, is not advantageously able to reach and make contact with the second contact sensor 38 and the control system does not authorize the picking up of the workpiece P, so that greater damage, for example to the machine tool M or to the workpiece handling robot, is avoided.

It should be emphasized that other types of second probe elements 42, such as could be, e.g., a plate of enlarged conformation that does not extend along the direction D2 but rather over an entire horizontal plane, would not be able to ensure the reliable operation of the probe bracket 37 because, in the case described above, they would make contact with the second contact sensor 38 even if the rotation around the predetermined angle of rotation α has not been completed.

The first contact sensor 28 and the second contact sensor 38 are substantially arranged on the same lying plane G passing through the main axis A.

This advantageously allows the sensing lines 30, 39 to be arranged on the same side as the basic body 2 and allow them to be more easily connected to the control system.

The auxiliary bracket 26 and the probe bracket 37 extend along directions D1 and D2 substantially transverse, preferably orthogonal, to the main axis A and staggered from each other by an angle substantially equal to the predetermined angle of rotation α (see Figure 6).

It should be noted that in the home position, the direction D2 of the probe bracket 37 lies in the lying plane G, while the direction D1 of the auxiliary bracket 26 is rotated with respect to the lying plane G by an angle equal to the predetermined angle of rotation α; in the work position, on the other hand, it is the direction D1 of the auxiliary bracket 26 that lies in the lying plane G while the direction D2 of the probe bracket 37 is rotated with respect to the lying plane G by an angle equal to the predetermined angle of rotation α. Conveniently, the device 1 comprises a covering and protective casing 40, which is associated with the basic body 2 and is adapted to cover and protect the second control assembly 36.

The covering and protective casing 40 comprises a cup-shaped element 41 defining an internal volume V3 inside which the second probe element 42 is movable.

In this way, the second probe element 42 and the second contact sensor 38 remain in a substantially separate and protected environment from the rest of the machine tool M.

In particular, it can be noted that, in the particular arrangement of the device 1 shown in the figures, the hollow liner 4 and the bottom plate 5 are housed inside the second volume V2 which, as mentioned above, represents the area inside the machine tool M that is generally inaccessible during the execution of the mechanical machining operations and which, for that reason, is more subject to accumulation of condensation, dirt, rust and other erosive agents.

Thanks to the presence of the covering and protective casing 40, the second probe element 42 and the second contact sensor 38 remain clean and protected, and damage to them is avoided that could prevent the proper operation of the device 1.

The operation of this invention is as follows.

The workpiece P is placed on the worktop L with the clamping bracket 19, 20 arranged in the home position.

In the home position, in practice, the clamping bracket 19, 20 leaves an area of the worktop L clear to allow the positioning of the workpiece P on the machine tool M.

In this circumstance, the probe bracket 37 makes contact against the second slider 38, thus allowing the control system to verify whether the clamping bracket 19, 20 is actually in the home position and to authorize activation of the robot for the necessary gripping and handling operations of the workpiece P above the worktop L (Figure 3).

Following the supply of the hydraulic fluid under pressure inside the fluid-operated cylinder 3, 4, 5, the stem 8, 9, 10 slides inside the basic body 2 along the first stretch 12 and the clamping bracket 19, 20 moves from the home position to the intermediate position.

In the intermediate position, the clamping bracket 19, 20 is rotated with respect to the home position and is placed with the distal portion 20 overhanging the workpiece P (Figure 4).

Once the intermediate position is reached, the supply of the hydraulic fluid under pressure inside the fluid-operated cylinder 3, 4, 5 continues, and the stem 8, 9, 10 slides inside the basic body 2 along the second stretch 13.

During the motion of the stem 8, 9, 10 along the second stretch 13, the clamping bracket 19, 20 moves from the intermediate position to the work position wherein the distal portion 20 rests on the workpiece P by clamping it on the machine tool M.

In this circumstance, the first probe element 26, 27 makes contact against the first slider 28, thus allowing the control system to verify whether the clamping bracket 19, 20 is actually in the clamping position and to consent to the execution of the mechanical machining operations by the tools of the machine tool M (Figure 5).

## Claims

1. Device (1) for clamping workpieces on machine tools, comprising:
- at least one basic body (2) fixable to a machine tool (M) and provided with a fluid-operated cylinder (3, 4, 5) containing a fluid under pressure;
- at least one stem (8, 9, 10) extending along a main axis (A) and is partly inserted into said fluid-operated cylinder (3, 4, 5) in a sliding manner along said main axis (A) by thrust of said fluid under pressure, said stem (8, 9, 10) comprising at least one intermediate portion (8) arranged inside said fluid-operated cylinder (3, 4, 5) and a first end portion (9) extending out of said fluid-operated cylinder (3, 4, 5);
- at least one clamping bracket (19, 20) associated with said first end portion (9) of the stem (8, 9, 10) for clamping a workpiece (P) to be machined on said machine tool (M), said clamping bracket (19, 20) being movable at least between:
- a home position, wherein said clamping bracket (19, 20) is spaced apart from said basic body (2); and
- a work position, wherein said clamping bracket (19, 20) is moved close to said basic body (2) for clamping said workpiece (P);
- at least a first control assembly (25) for controlling the attainment of said work position, comprising:
- at least a first probe element (26, 27) associated with said first end portion (9) of said stem (8, 9, 10); and
- at least a first contact sensor (28) associated with said basic body (2) and adapted to detect the contact with said first probe element (26, 27) in said work position;
wherein said stem (8, 9, 10) comprises at least a second end portion (10) extending out of said fluid-operated cylinder (3, 4, 5) on an opposite side with respect to said first end portion (9), and wherein said device (1) comprises at least a second control assembly (36) for controlling the attainment of said home position, comprising:
- at least a second probe element (42) associated with said second end portion (10) of said stem (8, 9, 10); and
- at least a second contact sensor (38) associated with said basic body (2) and adapted to detect the contact with said second probe element (42) in said home position;
**characterized by** the fact that said second probe element (42) comprises at least one probe bracket (37), which extends cantilevered from said second end portion (10) along a direction (D2) substantially transverse to said main axis (A) and which is adapted to come into contact with said second contact sensor (38) in said home position.

2. Device (1) according to claim 1, **characterized by** the fact that it comprises a covering and protective casing (40) of said second control assembly (36), which is associated with said basic body (2).

3. Device (1) according to claim 2, **characterized by** the fact that said covering and protective casing (40) comprises a cup-shaped element (41) defining an internal volume (V3), said second probe element (42) being movable inside said internal volume (V3).

4. Device (1) according to one or more of the preceding claims, **characterized by** the fact that said first probe element (26, 27) comprises:
- an auxiliary bracket (26), extending cantilevered from said first end portion (9) along a direction (D1) substantially transverse to said main axis (A); and
- a probe pin (27), which is associated with said auxiliary bracket (26), extends along a direction substantially parallel to said main axis (A) and is adapted to come into contact with said first contact sensor (28) in said work position.

5. Device (1) according to one or more of the preceding claims, **characterized by** the fact that it comprises roto-translation means (14, 15, 16) positioned between said fluid-operated cylinder (3, 4, 5) and said stem (8, 9, 10) and adapted to split the motion of said stem (8, 9, 10) into:
- at least a first roto-translation stretch (12), wherein said stem (8, 9, 10) slides along said main axis (A) and rotates around said main axis (A) for a predetermined angle of rotation (α); and
- at least a second translation stretch (13), wherein said stem (8, 9, 10) slides along said main axis (A) without rotating.

6. Device (1) according to claim 5, **characterized by** the fact that said roto-translation means (14, 15, 16) comprise:
- at least one groove (14) formed on at least one of either said stem (8, 9, 10) or said fluid-operated cylinder (3, 4, 5) and having a first section (17) substantially helical and a second section (18) substantially straight; and
- at least one engagement element (15) mounted on the other of either said stem (8, 9, 10) or said fluid-operated cylinder (3, 4, 5) and inserted inside said groove (14) in a sliding manner;
the sliding of said engagement element (15) along said first section (17) causing the motion of said stem (8, 9, 10) along said first stretch (12) and the sliding of said engagement element (15) along said second section (18) thus causing the motion of said stem (8, 9, 10) along said second stretch (13).

7. Device (1) according to claim 6, **characterized by** the fact that said roto-translation means (14, 15, 16) comprise elastic offset means (16) adapted to push said engagement element (15) inside said groove (14).

8. Device (1) according to one or more of claims 5 to 7, **characterized by** the fact that said clamping bracket (19, 20) comprises an intermediate position, wherein said clamping bracket (19, 20) is rotated and moved close to said basic body (2) with respect to said home position as a result of the motion of said stem (8, 9, 10) along said first stretch (12), in said work position said clamping bracket (19, 20) being further moved close to said basic body (2) with respect to said intermediate position as a result of the motion of said stem (8, 9, 10) along said second stretch (13).

9. Device (1) according to one or more of preceding claims, **characterized by** the fact that said first contact sensor (28) and said second contact sensor (38) are substantially arranged on the same lying plane (G) passing through said main axis (A), and by the fact that said auxiliary bracket (26) and said probe bracket (37) extend along directions (D1, D2) substantially transverse to said main axis (A) and staggered from each other by an angle substantially equal to said predetermined angle of rotation (α).

## Patentansprüche

1. Vorrichtung (1) zum Einspannen von Werkstücken auf Werkzeugmaschinen, umfassend:
- mindestens einen Grundkörper (2), der an einer Werkzeugmaschine (M) befestigbar ist und mit einem fluidbetätigten Zylinder (3, 4, 5) versehen ist, der ein unter Druck stehendes Fluid enthält;
- mindestens einen Schaft (8, 9, 10), der sich entlang einer Hauptachse (A) erstreckt und der teilweise in gleitender Weise entlang der Hauptachse (A) durch den Druck des unter Druck stehenden Fluids in den fluidbetätigten Zylinder (3, 4, 5) eingeschoben ist, wobei der Schaft (8, 9, 10) mindestens einen Zwischenabschnitt (8), der innerhalb des fluidbetätigten Zylinders (3, 4, 5) angeordnet ist, und einen ersten Endabschnitt (9) aufweist, der sich aus dem fluidbetätigten Zylinder (3, 4, 5) heraus erstreckt;
- mindestens eine Spannklammer (19, 20), die mit dem ersten Endabschnitt (9) des Schafts (8, 9, 10) verbunden ist, um ein Werkstück (P), das auf der Werkzeugmaschine (M) bearbeitet werden soll, einzuspannen, wobei die Spannklammer (19, 20) mindestens zwischen folgenden Positionen beweglich ist:
- einer Ausgangsposition, in der die Spannklammer (19, 20) von dem Grundkörper (2) beabstandet ist; und
- einer Arbeitsposition, in der die Spannklammer (19, 20) zum Einspannen des Werkstücks (P) nahe an den Grundkörper (2) herangeführt ist;
- mindestens eine erste Steuereinheit (25) zum Steuern des Erreichens der Arbeitsposition, umfassend:
- mindestens ein erstes Tastelement (26, 27), das mit dem ersten Endabschnitt (9) des Schafts (8, 9, 10) verbunden ist; und
- mindestens einen ersten Kontaktsensor (28), der mit dem Grundkörper (2) verbunden und ausgebildet ist, den Kontakt mit dem ersten Tastelement (26, 27) in der Arbeitsposition zu erfassen;
wobei der Schaft (8, 9, 10) mindestens einen zweiten Endabschnitt (10) umfasst, der sich aus dem fluidbetätigten Zylinder (3, 4, 5) heraus auf einer dem ersten Endabschnitt (9) gegenüberliegenden Seite erstreckt, und wobei die Vorrichtung (1) mindestens eine zweite Steuereinheit (36) zum Steuern des Erreichens der Ausgangsposition aufweist, umfassend:
- mindestens ein zweites Tastelement (42), das mit dem zweiten Endabschnitt (10) des Schafts (8, 9, 10) verbunden ist; und
- mindestens einen zweiten Kontaktsensor (38), der mit dem Grundkörper (2) verbunden und ausgebildet ist, den Kontakt mit dem zweiten Tastelement (42) in der Ausgangsposition zu erfassen;
**dadurch gekennzeichnet, dass** das zweite Tastelement (42) mindestens eine Tasterklammer (37) umfasst, die sich freitragend von dem zweiten Endabschnitt (10) entlang einer Richtung (D2) erstreckt, die im Wesentlichen quer zu der Hauptachse (A) verläuft, und die ausgebildet ist, in der Ausgangsposition mit dem zweiten Kontaktsensor (38) in Kontakt zu treten.

2. Vorrichtung (1) nach Anspruch 1, **dadurch gekennzeichnet, dass** sie ein Abdeck- und Schutzgehäuse (40) für die zweite Steuereinheit (36) umfasst, das mit dem Grundkörper (2) verbunden ist.

3. Vorrichtung (1) nach Anspruch 2, **dadurch gekennzeichnet, dass** das Abdeckund Schutzgehäuse (40) ein becherförmiges Element (41) umfasst, das ein Innenvolumen (V3) definiert, wobei das zweite Tastelement (42) innerhalb des Innenvolumens (V3) beweglich ist.

4. Vorrichtung (1) nach einem oder mehreren der vorstehenden Ansprüche, **dadurch gekennzeichnet, dass** das erste Tastelement (26, 27) umfasst:
- eine Hilfsklammer (26), die sich freitragend von dem ersten Endabschnitt (9) entlang einer Richtung (D1) erstreckt, die im Wesentlichen quer zu der Hauptachse (A) verläuft; und
- einen Taststift (27), der mit der Hilfsklammer (26) verbunden ist, sich entlang einer Richtung erstreckt, die im Wesentlichen parallel zu der Hauptachse (A) verläuft, und ausgebildet ist, in der Arbeitsposition mit dem ersten Kontaktsensor (28) in Kontakt zu treten.

5. Vorrichtung (1) nach einem oder mehreren der vorhergehenden Ansprüche, **dadurch gekennzeichnet, dass** sie Rotations-Translations-Mittel (14, 15, 16) umfasst, die zwischen dem fluidbetätigten Zylinder (3, 4, 5) und dem Schaft (8, 9, 10) angeordnet und dazu ausgebildet sind, die Bewegung des Schafts (8, 9, 10) aufzuteilen in:
- mindestens eine erste Dreh-Translations-Strecke (12), in der der Schaft (8, 9, 10) entlang der Hauptachse (A) gleitet und um die Hauptachse (A) um einen vorbestimmten Drehwinkel (α) dreht; und
- mindestens eine zweite Translations-Strecke (13), in der der Schaft (8, 9, 10) ohne Drehung entlang der Hauptachse (A) gleitet.

6. Vorrichtung (1) nach Anspruch 5, **dadurch gekennzeichnet, dass** die Rotations-Translations-Mittel (14, 15, 16) umfassen:
- mindestens eine Nut (14), die an mindestens einem der Elemente, entweder dem Schaft (8, 9, 10) oder dem fluidbetätigten Zylinder (3, 4, 5), ausgebildet ist und einen ersten Abschnitt (17), der im Wesentlichen spiralförmig ist, und einen zweiten Abschnitt (18) aufweist, der im Wesentlichen gerade ist; und
- mindestens ein Eingriffselement (15), das an dem anderen Element, entweder dem Schaft (8, 9, 10) oder dem fluidbetätigten Zylinder (3, 4, 5), angebracht ist und gleitend in die Nut (14) eingesetzt ist;
wobei das Gleiten des Eingriffselements (15) entlang des ersten Abschnitts (17) die Bewegung des Schafts (8, 9, 10) entlang der ersten Strecke (12) bewirkt und das Gleiten des Eingriffselements (15) entlang des zweiten Abschnitts (18) somit die Bewegung des Schafts (8, 9, 10) entlang der zweiten Strecke (13) bewirkt.

7. Vorrichtung (1) nach Anspruch 6, **dadurch gekennzeichnet, dass** die Rotations-Translations-Mittel (14, 15, 16) elastische Versatzmittel (16) umfassen, die ausgebildet sind, das Eingriffselement (15) in die Nut (14) zu drücken.

8. Vorrichtung (1) nach einem oder mehreren der Ansprüche 5 bis 7, **dadurch gekennzeichnet, dass** die Spannklammer (19, 20) eine Zwischenposition aufweist, in der die Spannklammer (19, 20) gedreht und in Bezug auf die Ausgangsposition in die Nähe des Grundkörpers (2) bewegt ist, infolge der Bewegung des Schafts (8, 9, 10) entlang der ersten Strecke (12), wobei die Spannklammer (19, 20) in der Arbeitsposition in Bezug auf die Zwischenposition noch näher an den Grundkörper (2) bewegt ist infolge der Bewegung des Schafts (8, 9, 10) entlang der zweiten Strecke (13).

9. Vorrichtung (1) nach einem oder mehreren der vorhergehenden Ansprüche, **dadurch gekennzeichnet, dass** der erste Kontaktsensor (28) und der zweite Kontaktsensor (38) im Wesentlichen auf derselben Ebene (G) angeordnet sind, die durch die Hauptachse (A) verläuft, und dadurch, dass sich die Hilfsklammer (26) und die Tasterklammer (37) entlang Richtungen (D1, D2) erstrecken, die im Wesentlichen quer zu der Hauptachse (A) verlaufen und um einen Winkel zueinander versetzt sind, der im Wesentlichen dem vorbestimmten Drehwinkel (α) entspricht.

## Revendications

1. - Dispositif (1) de serrage de pièces de travail sur des machines-outils, comprenant :
- au moins un corps de base (2) apte à être fixé à une machine-outil (M) et comportant un vérin à commande hydraulique (3, 4, 5) contenant un fluide sous pression ;
- au moins une tige (8, 9, 10) s'étendant le long d'un axe principal (A) et qui est partiellement introduite dans ledit vérin à commande hydraulique (3, 4, 5) d'une manière coulissante le long dudit axe principal (A) par poussée dudit fluide sous pression, ladite tige (8, 9, 10) comprenant au moins une partie intermédiaire (8) disposée à l'intérieur dudit vérin à commande hydraulique (3, 4, 5) et une première partie d'extrémité (9) s'étendant hors dudit vérin à commande hydraulique (3, 4, 5) ;
- au moins un support de serrage (19, 20) associé à ladite première partie d'extrémité (9) de la tige (8, 9, 10) pour le serrage d'une pièce de travail (P) à usiner sur ladite machine-outil (M), ledit support de serrage (19, 20) étant mobile au moins entre :
- une position de repos, dans laquelle ledit support de serrage (19, 20) est espacé dudit corps de base (2) ; et
- une position de travail, dans laquelle ledit support de serrage (19, 20) est déplacé à proximité dudit corps de base (2) pour serrer ladite pièce de travail (P) ;
- au moins un premier ensemble de commande (25) pour commander l'atteinte de ladite position de travail, comprenant :
- au moins un premier élément de sonde (26, 27) associé à ladite première partie d'extrémité (9) de ladite tige (8, 9, 10) ; et
- au moins un premier capteur de contact (28) associé audit corps de base (2) et apte à détecter le contact avec ledit premier élément de sonde (26, 27) dans ladite position de travail ;
dans lequel ladite tige (8, 9, 10) comprend au moins une seconde partie d'extrémité (10) s'étendant hors dudit vérin à commande hydraulique (3, 4, 5) sur un côté opposé par rapport à ladite première partie d'extrémité (9), et dans lequel ledit dispositif (1) comprend au moins un second ensemble de commande (36) pour commander l'atteinte de ladite position de repos, comprenant :
- au moins un second élément de sonde (42) associé à ladite seconde partie d'extrémité (10) de ladite tige (8, 9, 10) ; et
- au moins un second capteur de contact (38) associé audit corps de base (2) et apte à détecter le contact avec ledit second élément de sonde (42) dans ladite position de repos ;
**caractérisé par le fait que** ledit second élément de sonde (42) comprend au moins un support de sonde (37), qui s'étend en porte-à-faux à partir de ladite seconde partie d'extrémité (10) le long d'une direction (D2) sensiblement transversale audit axe principal (A) et qui est apte à entrer en contact avec ledit second capteur de contact (38) dans ladite position de repos.

2. - Dispositif (1) selon la revendication 1, **caractérisé par le fait qu'**il comprend une enveloppe de recouvrement et de protection (40) dudit second ensemble de commande (36), qui est associée audit corps de base (2).

3. - Dispositif (1) selon la revendication 2, **caractérisé par le fait que** ladite enveloppe de recouvrement et de protection (40) comprend un élément en forme de coupelle (41) définissant un volume interne (V3), ledit second élément de sonde (42) étant mobile à l'intérieur dudit volume interne (V3).

4. - Dispositif (1) selon l'une ou plusieurs des revendications précédentes, **caractérisé par le fait que** ledit premier élément de sonde (26, 27) comprend :
- un support auxiliaire (26), s'étendant en porte-à-faux à partir de ladite première partie d'extrémité (9) le long d'une direction (D1) sensiblement transversale audit axe principal (A) ; et
- une tige de sonde (27), qui est associée audit support auxiliaire (26), s'étend le long d'une direction sensiblement parallèle audit axe principal (A) et est apte à entrer en contact avec ledit premier capteur de contact (28) dans ladite position de travail.

5. - Dispositif (1) selon l'une ou plusieurs des revendications précédentes, **caractérisé par le fait qu'**il comprend des moyens de roto-translation (14, 15, 16) positionnés entre ledit vérin à commande hydraulique (3, 4, 5) et ladite tige (8, 9, 10) et apte à diviser le mouvement de ladite tige (8, 9, 10) en :
- au moins une première étendue de rotationtranslation (12), dans laquelle ladite tige (8, 9, 10) coulisse le long dudit axe principal (A) et tourne autour dudit axe principal (A) sur un angle de rotation prédéterminé (α) ; et
- au moins une seconde étendue de translation (13), dans laquelle ladite tige (8, 9, 10) coulisse le long dudit axe principal (A) sans tourner.

6. - Dispositif (1) selon la revendication 5, **caractérisé par le fait que** lesdits moyens de roto-translation (14, 15, 16) comprennent :
- au moins une rainure (14) formée sur au moins l'un de ladite tige (8, 9, 10) et dudit vérin à commande hydraulique (3, 4, 5) et présentant une première section (17) sensiblement hélicoïdale et une seconde section (18) sensiblement rectiligne ; et
- au moins un élément d'engagement (15) monté sur l'autre de ladite tige (8, 9, 10) et dudit vérin à commande hydraulique (3, 4, 5) et introduit à l'intérieur de ladite rainure (14) d'une manière coulissante ;
le coulissement dudit élément d'engagement (15) le long de ladite première section (17) provoquant le déplacement de ladite tige (8, 9, 10) le long de ladite première étendue (12) et le coulissement dudit élément d'engagement (15) le long de ladite seconde section (18) provoquant ainsi le déplacement de ladite tige (8, 9, 10) le long de ladite seconde étendue (13).

7. - Dispositif (1) selon la revendication 6, **caractérisé par le fait que** lesdits moyens de roto-translation (14, 15, 16) comprennent des moyens de décalage élastiques (16) aptes à pousser ledit élément d'engagement (15) à l'intérieur de ladite rainure (14).

8. - Dispositif (1) selon l'une ou plusieurs des revendications 5 à 7, **caractérisé par le fait que** ledit support de serrage (19, 20) comprend une position intermédiaire, dans laquelle ledit support de serrage (19, 20) est tourné et déplacé à proximité dudit corps de base (2) par rapport à ladite position de repos par suite du mouvement de ladite tige (8, 9, 10) le long de ladite première étendue (12), dans ladite position de travail, ledit support de serrage (19, 20) étant davantage déplacé à proximité dudit corps de base (2) par rapport à ladite position intermédiaire par suite du mouvement de ladite tige (8, 9, 10) le long de ladite seconde étendue (13).

9. - Dispositif (1) selon l'une ou plusieurs des revendications précédentes, **caractérisé par le fait que** ledit premier capteur de contact (28) et ledit second capteur de contact (38) sont sensiblement disposés sur le même plan d'agencement (G) passant par ledit axe principal (A), et **par le fait que** ledit support auxiliaire (26) et ledit support de sonde (37) s'étendent le long de directions (D1, D2) sensiblement transversales audit axe principal (A) et décalées l'une par rapport à l'autre d'un angle sensiblement égal audit angle de rotation prédéterminé (α).
